(19) Europäisches Patentamt
European Patent Office
Office européen des brevets

(11) **EP 3 838 533 A1**

(12) **EUROPÄISCHE PATENTANMELDUNG**

(43) Veröffentlichungstag:
23.06.2021 Patentblatt 2021/25

(51) Int Cl.:
*B29B 7/84* (2006.01)      *B29C 48/29* (2019.01)
*B29C 48/76* (2019.01)      *B29C 48/92* (2019.01)
*B29C 67/24* (2006.01)

(21) Anmeldenummer: 19216799.7

(22) Anmeldetag: **17.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **REAKTIVEXTRUSION VON TPU MIT ENTGASUNG**

(57) Die Erfindung betrifft ein Verfahren zur Herstellung eines thermoplastischen Polyurethans aus einem OH-funktionellen Prepolymer und einem Isocyanat mittels Reaktivextrusion umfassend die folgenden Schritte:
a) Einleiten eines Prepolymerstroms enthaltend OH-funktionelle Prepolymere in einen Extruder,
b) Einleiten eines Isocyanatzuführungsstroms in den Extruder in Extruderarbeitsrichtung stromabwärts der Einleitung des Prepolymerstroms, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 105 zueinander stehen,
c) Umsetzen des Prepolymerstroms mit dem Isocyanatzuführungsstrom in dem Extruder unter Erhalt des thermoplastischen Polyurethans als Extrudat, wobei Gase und/oder gasförmige Nebenprodukte der Umsetzung aus dem Extruder durch Anlegen eines Unterdrucks von 50 bis 700 mbar unter Normaldruck mittels eines an dem Extruder angeordneten Entgasungsschachtes entfernt werden, wobei der Entgasungsschacht stromabwärts der Einleitung des Isocyanatzuführungsstroms und im in Extruderarbeitsrichtung letzten Drittel des Extruders positioniert ist.

Des Weiteren betrifft die Erfindung eine Vorrichtung zur Durchführung des erfindungsgemäßen Verfahrens. Ferner betrifft die Erfindung ein thermoplastisches Polyurethan erhältlich oder erhalten durch das erfindungsgemäße Verfahren sowie die Verwendung des thermoplastischen Polyurethans in einem Formgebungsverfahren unter Aufschmelzen des thermoplastischen Polyurethans, insbesondere zur Herstellung von Innenraumbauteilen von Fahrzeugen.

Fig. 1

EP 3 838 533 A1

## Beschreibung

Die vorliegende Erfindung betrifft ein Verfahren zur Reaktivextrusion von thermoplastischem Polyurethan, wobei aus dem thermoplastischen Polyurethan Gase und gasförmige Nebenprodukte vor dem Auspressen aus dem Extruder entfernt werden. Des Weiteren betrifft die Erfindung ein durch dieses Verfahren erhaltenes thermoplastisches Polyurethan und eine Vorrichtung zur Durchführung des Verfahrens.

Thermoplastische Polyurethane sind weitgehend unverzweigte Makromoleküle. Sie werden üblicherweise erhalten, indem bifunktionellen Isocyanate, langkettige Diole, wie z.B. Polyether oder Polyester, und Kettenverlängerer miteinander zur Reaktion gebracht werden. Es gibt verschiedene technische Verfahren zur Herstellung von thermoplastischem Polyurethan (TPU), wobei zwischen diskontinuierlichen Batch-Verfahren und kontinuierlichen Verfahren unterschieden wird. Ein kontinuierliches Verfahren ist die Reaktivextrusion, bei der die zur Herstellung dienenden Ausgangsstoffe in einen Extruder eingetragen werden. Die Reaktivextrusion ist von der Verwendung eines Extruders zur reinen Verarbeitung von Kunststoffen zu unterscheiden. Bei der Reaktiv-Extrusion werden die Ausgangsstoffe durch die Drehbewegungen der Schnecke des Extruders vermischt und reagieren miteinander, sodass eine Polymerschmelze erhalten wird. Diese Polymerschmelze wird dann aus dem Extruder ausgepresst und die erhaltenen Extrudat-Stränge, evtl. nach einer Abkühlung in einem Wasserbad, zu Granulat geschnitten oder direkt in eine bestimmte Form gebracht. Bei der Verarbeitung von TPU in einem Extruder wird ein Granulat aus bereits synthetisiertem TPU im Extruder aufgeschmolzen und die Schmelze extrudiert.

Nach dem Austritt aus der Extruderdüse können Konsistenzveränderungen im Polymerstrang auftreten, welche die weitere Verarbeitung beeinträchtigen. Beispielsweise können spröde, brüchige Polymerstränge erhalten werden, die abbrechen oder abreißen. Neben den spröden, brüchigen Strängen werden auch inhomogene Stränge beobachtet, die in unregelmäßigen periodischen Abständen dickere, gelartige Verdickungen enthalten. Im Nachlauf dieser Verdickungen können die Stränge sehr dünn werden und dadurch leicht reißen. Derartige Polymerstränge können nicht mehr oder nur mit erheblichem Aufwand weiter verarbeitet werden, weil häufige Abrisse stets manuelle Eingriffe erfordern, um die Polymerstränge zum Granulator zu befördern. Außerdem muss das Reaktivextrusions-verfahren unterbrochen werden, wenn der ausgepresste Polymerstrang zu brüchig geworden ist, um wieder eingefädelt werden zu können, und erst nach einer Reinigung des Extruders kann die Produktion wieder aufgenommen werden. Dadurch entstehen große Abfallmengen an nicht verwertbarem Polymer.

Werkstoffe und Bauteile aus thermoplastischem Polyurethan (TPU) werden in unterschiedlichen Bereichen verwendet und sind dabei verschiedenen Bedingungen ausgesetzt, wie beispielsweise extremen Temperaturen, starker mechanischer Belastung, oder Angriffen durch Chemikalien. Die maximale Nutzungsdauer eines Werkstoffs oder Bauteils wird maßgeblich durch seine thermooxidative Stabilität bestimmt. Unter thermooxidativer Stabilität versteht man die Beeinflussung von Werkstoffen oder Bauteilen durch Wärmeenergie in Anwesenheit von Sauerstoff. Dieser Prozess ist stark temperaturabhängig. Während die Oxidation bei Umgebungstemperatur äußerst langsam verläuft, führen steigende Temperaturen zu einer Beschleunigung der Oxidation. Üblicherweise werden Verbindungen, welche die Oxidationsprozesse aufhalten oder verzögern, sog. Antioxidantien wie beispielsweise sterisch gehinderte Phenole sekundäre aromatische Amine und/oder sterisch gehinderte Amine teilweise zusammen mit Thioethern, Phosphiten oder Phosphinen verwendet, um die thermooxidative Stabilität zu gewährleisten (Kunststoff Handbuch Polyurethane, Hrsg. Günter Oertel, 3. Auflage, Kapitel 3.4.8, S. 120 ff). Derartige Verbindungen können zu Verfärbungen des Polyurethans führen. Des Weiteren bestehen gegenüber einigen Antioxidantien Bedenken im Hinblick auf ihre Auswirkungen auf den menschlichen und tierischen Organismus und die Umwelt.

Aus dem Stand der Technik sind Verfahren zur Reaktivextrusion von Polymeren bekannt.

Die EP 0708124 bezieht sich auf ein Verfahren zur Reaktivextrusion von TPU und lehrt, dass durch eine bestimmte Ausgestaltung der Geometrie der im Extruder befindlichen Schnecken eine homogene Polymerschmelze erhalten werden kann, die insbesondere weniger gelartige Knötchen enthält. Die Druckschrift offenbart, dass während der Reaktivextrusion Antioxidantien zu der Polymerschmelze hinzugegeben werden können. Sie enthält keine Offenbarung zur Entgasung während der Reaktivextrusion oder zu Problemen beim Auspressen eines Polymers aus dem Extruder.

Die CN 10 5001626 offenbart ebenfalls ein Verfahren für die Reaktivextrusion von Polyurethan, wobei nicht auf eine Entgasung während der Reaktion oder Probleme bei der Extrusion Bezug genommen wird. Die Druckschrift offenbart, dass eine gute Verarbeitbarkeit des erhaltenen Polymers durch die Zugabe von Glykolen erreicht werden kann, wobei sie sich nicht auf die thermooxidative Stabilität des erhaltenen Polyurethans bezieht.

Die WO 2009/086459 bezieht sich auf die reaktive Extrusion von feuchtigkeitshärtbaren Polyurethan-Klebemassen und nennt als Vorteil, dass die Herstellung eines Prepolymers als zusätzlicher Verfahrensschritt entfallen soll. Die Druckschrift offenbart, dass die PUR-Klebemasse Antioxidantien enthalten kann und dass im Extruder befindliche Polymerschmelze durch eine Vakuumentgasung an verschiedenen Stellen des Extruders von Gasen und gasförmigen Bestandteilen befreit werden soll. Diese Druckschrift beschäftigt sich nicht mit Problemen bei dem Auspressen der Polymerschmelze aus dem Extruder unter Erhalt von Polymersträngen, vielmehr wird das erhaltene Polyurethan in Tanks abgefüllt.

Die DE 44 029 434 offenbart einen Thermoplasten, der durch Silanvernetzung von Polyethylen und Polyprophylen in einem Extruder erhalten wird. Während der Reaktivextrusion findet eine Vakuumentgasung an mehreren Stellen des Extruders statt. Die Druckschrift bezieht sich darauf, dass durch das Verfahren die extrudierten Stränge eine glatte Oberfläche und eine geringe Strangaufweitung aufweisen und daher besonders gut für die Herstellung von Profilen oder Extrudaten mit komplexen Geometrien geeignet seien. Die Druckschrift nennt keine Einzelheiten der Entgasungsverfahren und auch keine Druckbereiche, bei denen die Entgasung durchgeführt wird. Der Thermoplast kann Antioxidantien als Hilfsmittel erhalten.

Die US 2003/0154859 offenbart einen Extruder zur Herstellung von Polycarbonat. Dabei wird als Treibmittel Wasserdampf eingesetzt und es findet eine Entgasung zum Herauslösen des Wasserdampfs mit Vakuum statt. Auch diese Druckschrift bezieht sich nicht auf Probleme beim Austritt aus der Extruderdüse, sondern möchte Qualitätseinbußen durch Verfärbung und Gelbildung verhindern.

Keines der Dokumente des Standes der Technik beschäftigt sich mit der Frage, wie beim Auspressen von Polymer aus dem Extruder verhindert werden kann, dass der extrudierte Polymerstrang abreißt oder inhomogen und brüchig ist. Des Weiteren wird bei den aus dem Stand der Technik bekannten Reaktivextrusionsverfahren die thermooxidative Stabilität des Polyurethans durch Zugabe von Verbindungen erreicht, welche die Oxidationsprozesse aufhalten oder verzögern.

Es ist Aufgabe der vorliegenden Erfindung, ein Reaktivextrusionsverfahren für thermoplastisches Polyurethan zur Verfügung zu stellen, bei dem ein Abreißen der aus dem Extruder ausgepressten Polymerstränge verringert wird im Vergleich zu herkömmlichen Verfahren. Durch die vorliegende Erfindung soll im Vergleich zu bekannten Verfahren der Zeitraum verlängert werden, in dem eine Reaktivextrusion durchgeführt werden kann, ohne dass das Herstellungsverfahren aufgrund eines Abreißens der ausgepressten Polymerstränge unterbrochen werden muss. Außerdem ist es Aufgabe der Erfindung ein Reaktivextrusionsverfahren zur Verfügung zu stellen, bei dem die aus dem Extruder ausgepressten Polymerstränge eine homogene Struktur aufweisen und weniger brüchig sind als bei bekannten Reaktivextrusionsverfahren. Insbesondere soll ein Verfahren zur Reaktivextrusion von thermoplastischen Polyurethanen zur Verfügung gestellt werden, das ohne Unterbrechung über einen Zeitraum von mindestens 4 Stunden durchgeführt werden kann und bei dem die aus dem Extruder ausgepressten Polymerstränge eine homogene Struktur aufweisen und nicht abreißen. Außerdem sollen ein Reaktivextrusionsverfahren zur Verfügung gestellt werden, durch das ein thermoplastisches Polyurethan erhalten wird, das eine gute thermooxidative Stabilität aufweist. Insbesondere soll ein Verfahren zur Verfügung gestellt werden, bei dem der Einsatz von Verbindungen, welche die Oxidationsprozesse aufhalten oder verzögern, wie beispielsweise Antioxidatien oder Stabilisatoren, bei der Herstellung des thermoplastischen Polyurethans ganz entfällt.

Dabei wird unter einer guten thermooxidativen Stabilität verstanden, dass das thermoplastische Polyurethan eine Oxidationsinduktionstemperatur von mindestens 190 °C bevorzugt von 190 °C bis 230 °C, weiter bevorzugt von 190 bis 210 °C, gemessen mit Differentialthermoanalyse bei einer Heizrate von 20K/min nach DIN EN ISO 11357-6 (Mai 2017) aufweist.

Diese Aufgabe wurde gelöst durch ein Verfahren zur Herstellung eines thermoplastischen Polyurethans aus einem OH-funktionellen Prepolymer und einem Isocyanat mittels Reaktivextrusion umfassend die folgenden Schritte:

a) Einleiten des Prepolymerstroms enthaltend OH-funktionelle Prepolymere in einen Extruder,

b) Einleiten eines Isocyanatzuführungsstroms in den Extruder in Extruderarbeitsrichtung stromabwärts der Einleitung des Prepolymerstroms, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 105, bevorzugter von 95 bis 99,5 , zueinander stehen,

c) Umsetzen des Prepolymerstroms mit dem Isocyanatzuführungsstrom in dem Extruder unter Erhalt des thermoplastischen Polyurethans als Extrudat, wobei Gase und/oder gasförmige Nebenprodukte der Umsetzung aus dem Extruder, durch Anlegen eines Unterdrucks von 50 bis 700 mbar, bevorzugt 80 bis 650 mbar, weiter bevorzugt 100 bis 600 mbar, unter Normaldruck mittels eines an den Extruder angeordneten Entgasungsschacht entfernt werden, wobei der Entgasungsschacht stromabwärts der Einleitung des Isocyanatzuführungsstroms und im in Extruderarbeitsrichtung letzten Drittel des Extruders positioniert ist.

Der Prepolymerstrom wird bevorzugt durch die folgenden Schritte erzeugt:

- Mischen eines Polyisocyanatstroms und eines Polyolstroms in einer ersten Mischungseinrichtung, so dass ein Mischungsstrom erhalten wird, wobei die Massenströme des Polyisocyanatstroms und des Polyolstroms so eingestellt werden, dass der Isocyanat-Index im Mischungsstrom von 50 bis 95, bevorzugt 75 bis 85 beträgt,

- Einleiten des Mischungsstroms in einen Kreislaufstrom, der in einem Kreislauf geführt wird, wobei die Monomere des Polyisocyanatstroms und des Polyolstroms im Kreislaufstrom zu OH-funktionellen Prepolymeren reagieren,

- Abteilen eines Teilstroms vom Kreislaufstrom als Prepolymerstrom und Bereitstellung des Prepolymerstroms.

In dem Verfahren zur Bereitstellung des Prepolymerstroms enthält oder besteht der Polyisocyanatstrom bevorzugt aus aliphatischen, cycloaliphatische, aromatische oder araliphatische Diisocyanate oder Mischungen davon.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-l,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methylethyl)-benzol (TMXDI).

Beispiele für geeignete Triisocyanate sind Triphenylmethan-4,4',4"-triisocyanat oder 4-Isocyanatomethyl- 1,8-octandiisocyanat (TIN).

Bevorzugt enthält oder besteht der Polyisocyanatstrom in dem Verfahren zur Bereitstellung des Prepolymerstroms 1,6- Hexamethylendiisocyanat, 4,4-Methylendiphenyldiisocyanat, Isophorondiisocynat oder Mischungen davon. Insbesondere enthält oder besteht der Polyisocyanatstrom aus 1,6-Hexamethylendiisocyanat.

Bevorzugt enthält oder besteht der Polyolstrom aus aliphatischen, araliphatischen, aromatischen oder cycloaliphatischen Diolen oder Mischungen davon.

Beispiele für aliphatische, araliphatische, aromatischen oder cycloaliphatische Diole sind 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, hydriertes Bisphenol A (2,2-Bis(4-hydroxycyclohexyl)propan), 1,3-Cycloheptandiol, 1,4-Cycloheptandiol, 2-Methyl-1,4-cycloheptandiol, 4-Methyl-1,3-cycloheptandiol, 4,4'-(1-Methylethyliden)-biscyclohexanol, 1,3-Cyclooctandiol, 1,4-Cyclooctandiol, 1,5-Cyclooctandiol, 5-Methyl-1,4-cyclooctandiol, 5-Ethyl-1,4-cyclooctandiol, 5-Propyl-1,4-cyclooctandiol, 5-Butyl-1,4-cyclooctandiol, 1,2-Benzoldimethanol und 1,4-Bis-($\beta$-hydroxyethoxy-)benzol.

Bevorzugt enthält oder besteht der Polyolstrom in dem Verfahren zur Bereitstellung des Prepolymerstroms aus 1,4-Butandiol, Ethandiol, 1,6-Hexandiol, 1,4-Bis-($\beta$-hydroxyethoxy-)benzol oder Mischungen davon. Insbesondere enthält oder besteht der Polyolstrom aus 1,4-Butandiol.

Bevorzugt weist der Polyisocyanatstrom eine Temperatur von 20 bis 80°C und unabhängig hiervon der Polyolstrom eine Temperatur von 35 bis 80°C auf. Die Massenströme des Polyisocyanatstroms und des Polyolstroms werden so eingestellt, dass der Isocyanat-Index im Mischungsstrom von 50 bis 95, bevorzugt von 75 bis 85, beträgt.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

In einer bevorzugten Ausführungsform kann der Polyolstrom mit dem Polyisocyanatstrom bereits stromaufwärts der ersten Mischungseinrichtung zusammengeführt werden. In einer anderen Ausführungsform werden der Polyolstrom und der Isocyanatstrom unabhängig voneinander in die erste Mischungseinrichtung geführt. Bei der ersten Mischungseinrichtung handelt es sich bevorzugt um einen Statikmischer.

Der Mischungsstrom wird im zweiten Schritt des Verfahrens zur Bereitstellung eines Prepolymerstroms in einen Kreislaufstrom eingeleitet, der in einem Kreislauf geführt wird, wobei die Monomere des Polyisocyanatstroms und des Polyolstroms im Kreislaufstrom zu OH-funktionellen Prepolymeren weiterreagieren. Im dritten Schritt des Verfahrens zur Bereitstellung eines Prepolymerstroms wird ein Teilstrom vom Kreislaufstrom als Prepolymerstrom abgeteilt und für das Reaktivextrusionsverfahren bereitgestellt.

Dem Kreislaufstrom werden also Monomere des Polyisocyanatstroms und des Polyolstroms zugeführt und aus dem Kreislaufstrom OH-funktionelles Prepolymer entnommen. Der Kreislaufstrom enthält also eine Mischung aus Monomeren des Polyisocyanatstroms und des Polyolstroms sowie aus oligomeren Reaktionsprodukten und aus dem Prepolymer. Während des Durchlaufens des Kreislaufstroms reagieren die Monomere sowohl miteinander als auch mit im Kreislaufstrom bereits vorhandenen oligomeren Reaktionsprodukten dieser Monomere. Im Kreislaufstrom findet folglich eine kontinuierliche Reaktion unter Erhalt des OH-funktionellen Prepolymers statt. Dabei können einige Prepolymere den Kreislaufstrom bevorzugt mehrfach durchlaufen, bevor sie als Teilstrom abgeteilt werden.

Der Kreislaufstrom durchläuft bevorzugt eine ausreichend lange Mischstrecke, die bevorzugt auch aus mehreren Mischern zusammengesetzt sein kann, bevorzugt mindestens zwei Mischungseinrichtungen, wobei es sich insbesondere um mindestens eine temperierbare Mischungseinrichtungen handelt. Bevorzugt weist der Kreislaufstrom eine Temperatur von 160 bis 220 °C, bevorzugter von 170 bis 190 °C auf.

Der bereitgestellte Prepolymerstrom wird in Schritt a) des erfindungsgemäßen Verfahrens bevorzugt einlassseitig des Extruders in den Extruder eingeleitet. Bevorzugt werden vor dem Einleiten des Prepolymerstroms in den Extruder aus dem Prepolymerstrom Gase und gasförmige Nebenprodukte entfernt. In einer Ausführungsform werden Gase und gasförmige Nebenprodukte entfernt, indem der Prepolymerstrom durch eine Entlüftungseinrichtung mit einem Unterdruck von 0,1 bis 10 mbar unter Normaldruck geführt wird, wobei die Entlüftungseinrichtung vorzugsweise an dem Extruder angeordnet ist. Bevorzugt erfolgt die Entfernung von Gasen und gasförmigen Nebenprodukten durch eine atmosphärische Entgasung, d.h. durch eine Entlüftungseinrichtung, die an dem Extruder angeordnet ist, ohne Anlegung eines Unterdrucks.

In Schritt b) des erfindungsgemäßen Verfahrens wird ein Isocyanatzuführungsstrom in den Extruder in Extruderarbeitsrichtung stromabwärts der Einleitung des Prepolymerstroms eingeleitet. Bevorzugt wird der Isocyanatzuführungsstrom (F) im in Extruderarbeitsrichtung ersten Drittel, bevorzugt im ersten Viertel, in den Extruder (18) eingeleitet. Die Einleitung erfolgt in der Weise, dass die im Prepolymerstrom enthaltenen OH-funktionellen Prepolymere und das im Isocyanatzuführungsstrom enthaltene Polyisocyanat in einem Isocyanat-Index 85 bis 105, bevorzugt 95 bis 99,5, zueinander stehen. Bevorzugt enthält oder besteht der Isocyanatzuführungsstrom aus 1,6-Hexamethylendiisocyanat, 4,4-Methylendiphenyldiisocyanat, Isophorondiisocynat oder Mischungen davon, insbesondere enthält oder besteht der Isocyanatzuführungsstrom aus 1,6-Hexamethylendiisocyanat. In einer weiteren Ausführungsfrom enthalten oder bestehen der Polyisocyanatstrom und der Isocyanatzuführungsstrom aus 1,6-Hexamethylendiisocyanat, 4,4-Methylendiphenyldiisocyanat, Isophorondiisocynat oder Mischungen davon, insbesondere weisen der Polyisocyanatstrom und der Isocyanatzuführungsstrom dieselbe Zusammensetzung auf. Bevorzugt enthalten oder bestehen der Polyisocyanatstrom und der Isocyanatzuführungsstrom aus 1,6-Hexamethylendiisocyanat und der Polyolstrom enthält oder besteht aus 1,4-Butandiol.

In Schritt c) wird der Prepolymerstrom mit dem Isocyanatzuführungsstrom in dem Extruder umgesetzt unter Erhalt des thermoplastischen Polyurethans als Extrudat. In dem Extruder werden die beiden Komponenten durch die Bewegungen der Förderelemente im Inneren des Extruders sowohl durchmischt als auch in Extruderarbeitsrichtung stromabwärts in Richtung einer Auslassöffnung des Extruders befördert. Dabei reagieren die Komponenten miteinander in einem kontinuierlichen Prozess, so dass das thermoplastische Polyurethan erhalten wird. Bevorzugt nimmt die Viskosität der im Extruder befindlichen Komponenten in Extruderarbeitsrichtung mit fortschreitendem Polymerisationsgrad zu. Im Bereich der Einlassöffnungen für den Prepolymerstrom und den Isocyanatzuführungsstrom liegt im Extruder bevorzugt eine Mischung mit einer niedrigen Viskosität vor, die als Flüssigkeit bezeichnet werden kann, während kurz vor Austritt aus dem Extruder vorzugsweise eine Polymerschmelze vorliegt, welche eine höhere Viskosität aufweist als der Prepolymerstrom und der Isocyanatzuführungsstrom und als zähflüssig bezeichnet werden kann. Als Extruder werden hier sowohl einwellige als auch mehrwellige Extruder, zweiwellig gegen- oder gleichläufige Schneckenextruder oder Ring- oder Planetwalzenextruder oder andere handelsübliche Hochviskosreaktoren verstanden. Bevorzugt handelt es sich um einen gleichläufigen Doppelschneckenextruder. Bevorzugt wird die Umsetzung in Schritt c) bei einer Temperatur von 150 °C bis 280 °C, bevorzugter von 180 °C bis 260 °C durchgeführt.

Des Weiteren werden in Schritt c) des erfindungsgemäßen Verfahrens aus dem thermoplastischen Polyurethan Gase und/oder gasförmige Nebenprodukte der Umsetzung aus dem Extruder entfernt, indem ein Unterdruck von 50 bis 700 mbar, bevorzugter von 80 bis 650 mbar, noch bevorzugter von 100 bis 600 mbar, jeweils unter Normaldruck, an einem an den Extruder angeordneten Entgasungsschacht angelegt wird, wobei der Entgasungsschacht stromabwärts der Einleitung des Isocyanatzuführungsstroms und im in Extruderarbeitsrichtung letzten Drittel, bevorzugter im letzten Viertel, insbesondere im letzten Fünftel, des Extruders angeordnet ist.

Schritt c) wird bevorzugt durchgeführt, indem ein Vakuumdom auf dem Entgasungsschacht angeordnet ist und ein Unterdruck von 50 bis 250 mbar unter Normaldruck angelegt wird.

In einer anderen bevorzugten Ausführungsform des erfindungsgemäßen Verfahrens wird Schritt c) durchgeführt, indem in dem Entgasungschacht ein Entgasungsextruder angeordnet ist, auf dem sich ein Vakuumdom befindet und ein Unterdruck von 300 bis 700 mbar unter Normaldruck angelegt wird. Bei dem Entgasungsextruder handelt es sich bevorzugt um einen Schneckenextruder, bei dem die Laufrichtung der Schnecken so eingestellt ist, dass sie Polymerschmelze oder thermoplastisches Polyurethan, welches durch den Unterdruck aus dem Extruder in den Entgasungsschacht gezogen wird, wieder in den Extruder befördert.

In einer weiteren bevorzugten Ausführungsform wird in dem Entgasungsschacht des Extruders eine Rückhalteeinrichtung angeordnet und auf dem Entgasungsschacht ein Vakuumdom positioniert und ein Unterdruck von 50 bis 350 mbar jeweils unter Normaldruck angelegt. Bei dieser Ausführungsform wird ein Doppelschneckenextruder zur Durchführung des Verfahrens verwendet und die Öffnung des Entgasungsschachtes zum Extruder weist eine längliche Form auf und ist senkrecht zur Achse der Doppelschnecken ausgebildet, so dass durch die Öffnung ein Teil beider Doppelschnecken überdeckt wird. Die Rückhalteeinrichtung ist bevorzugt so ausgestaltet, dass ihre zum Extruder orientierte Öffnung den Bereich der aufdrehenden Schnecke und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke weg in Richtung des Vakuumdoms. So prallt Polymerschmelze oder thermoplastisches Polyurethan, welches in die Rückhalteeinrichtung gezogen wird, an dem schrägen Schacht ab und fällt wieder zurück in den Extruder und wird durch die Drehbewegung der Schnecken im Extruder wieder in den Extruder gezogen. Als Zwickel wird dabei der Eingreifbereich der beiden Schnecken bezeichnet. In Doppelschneckenextrudern berühren sich die beiden Schneckenelemente nicht, sind aber so ausgestaltet, dass sie ineinandergreifen. Der Eingreifbereich der beiden Schnecken wird Zwickel genannt. Als aufdrehende Schnecke wird die Schnecke bezeichnet, deren Rotationsbewegung von dem Gehäuse des Extruders weg zu dem Bereich zwischen den beiden Achsen der Schneckenelemente gerichtet ist. Ein Querschnitt der zuvor beschriebenen Rückhalteeinrichtung ist beispielsweise in dem Lehrbuch Klemens Kohlgrüber: Der Doppleschneckenextruder, 2. Auflage, Hanser-Verlag, 2016, ISBN: 978-3-446-43361-8, auf S. 743 als Form "A" abgebildet.

Unter Normaldruck wird im Sinne der Erfindung ein Druck von 101 325 Pa = 1013 25 bar verstanden.

Bevorzugt umfasst das Verfahren die folgenden abschließenden Schritte:

d) Abkühlen des thermoplastischen Polyurethans unter seinen Schmelzpunkt in einer Kühlungseinrichtung, wobei es sich bei der Kühlungseinrichtung bevorzugt um ein Wasserbad handelt, sowie optional
e) Zerkleinerung des thermoplastischen Polyurethans in einer Zerkleinerungseinrichtung, die auch als Granulator bezeichnet wird.

Dabei wird durch das Abkühlen aus dem thermoplastischen Polyurethan ein Feststoff erhalten, der in der Zerkleinerungseinrichtung bevorzugt zu einem Granulat zerkleinert wird. Dieses Granulat kann in einem Extrusionsverfahren zur Weiterverarbeitung aufgeschmolzen und die durch das Aufschmelzen erhaltene Polymerschmelze zu einem Formteil verarbeitet werden, zum Beispiel durch Einspritzen in eine Form.

Eine weitere Ausführungsform der Erfindung betrifft ein thermoplastisches Polyurethan erhältlich oder erhalten durch das erfindungsgemäße Verfahren. Bevorzugt weist das thermoplastische Polyurethan eine Oxidationsinduktionstemperatur von mindestens 190 °C gemessen mit Differentialthermoanalyse bei einer Heizrate von 20K/min nach DIN EN ISO 11357-6 (Mai 2017) auf, wobei das thermoplastische Polyurethan weiter bevorzugt eine Oxidationsinduktionstemperatur gemessen mit Differentialthermoanalyse bei einer Heizrate von 20K/min nach DIN EN ISO 11357-6 (Mai 2017) von 190 °C bis 230 °C, noch weiter bevorzugt von 190 bis 210 °C, aufweist.

In einer weiteren bevorzugten Ausführungsform betrifft die Erfindung ein thermoplastisches Polyurethan das eine Oxidationsinduktionstemperatur von mindestens 190 °C gemessen mit Differentialthermoanalyse bei einer Heizrate von 20K/min nach DIN EN ISO 11357-6 (Mai 2017) aufweist, wobei das thermoplastische Polyurethan weiter bevorzugt eine Oxidationsinduktionstemperatur gemessen mit Differentialthermoanalyse bei einer Heizrate von 20K/min nach DIN EN ISO 11357-6 (Mai 2017) von 190 °C bis 230 °C, noch weiter bevorzugt von 190 bis 210 °C, aufweist.

Eine weitere Ausführungsform der Erfindung betrifft die Verwendung eines thermoplastischen Polyurethans in einem Formgebungsverfahren unter Aufschmelzen des thermoplastischen Polyurethans, insbesondere zur Herstellung von Innenraumbauteilen von Fahrzeugen.

Eine weitere Ausführungsform der Erfindung betrifft eine Vorrichtung zur Durchführung des erfindungsgemäßen Verfahrens umfassend:

eine Prepolymerzuführungsleitung zur Förderung eines Prepolymerstroms welche einlassseitig in einen Extruder mündet und wobei der Extruder bevorzugt ein gleichläufiger Doppelschneckenextruder ist;
ein in der Prepolymerzuführungsleitung vorgesehenes Druckregelventil zur Regulierung des Drucks des Prepolymerstroms;

ein in der Prepolymerzuführungsleitung angeordnetes und insbesondere stromabwärts des Druckregelventils positioniertes Dreiwegeventil, von dem eine in einen Abfallbehälter mündende Abfallleitung abgeht, über die der Prepolymerstrom insbesondere bei Inbetriebnahme, Außerbetriebnahme oder Störung der Vorrichtung ganz oder teilweise in den Abfallbehälter geführt werden kann;

eine vorzugsweise an der Einmündung der Prepolymerzuführungsleitung in den Extruder angeordnete Entlüftungseinrichtung zur Entfernung von Gasen und gasförmigen Nebenprodukten aus dem Prepolymerstrom;

eine Isocyanatzuführungsleitung zur Förderung eines Isocyanatzuführungsstroms die in Extruderarbeitsrichtung vorzugsweise stromabwärts der Prepolymerzuführungsleitung in den Extruder mündet; wobei die Isocyanatzuführungsleitung bevorzugt im in Extruderarbeitsrichtung ersten Drittel, weiter bevorzugt im ersten Viertel, in den Extruder (18) mündet,

optional eine der Isocyanatzuführungsleitung zugeordnete dritte Fördereinrichtung zur Förderung des Isocyanatzuführungsstroms;

optional einen an der Isocyanatzuführungsleitung angeschlossenen dritten Massendurchflussmesser;

wobei der Extruder zur Umsetzung der Komponenten des Prepolymerstroms und der Komponenten des Isocyanatzuführungsstroms zu einem thermoplastischen Polyurethan geeignet und diesem ein Entgasungsschacht zur Entfernung von Gasen und gasförmigen Nebenprodukten mittels Unterdruck von 50 bis 700 mbar aus dieser Umsetzung zugeordnet ist, wobei der Entgasungsschacht stromabwärts der Einleitung des Isocyanatzuführungsstroms (F) und bevorzugt im in Extruderarbeitsrichtung letzten Drittel des Extruders angeordnet ist, wobei der Entgasungsschacht bevorzugt im letzten Viertel, insbesondere im letzten Fünftel des Extruders angeordnet ist;

optional eine hinter dem Auslass des Extruders angeordnete Kühlungseinrichtung, vorzugsweise ein Wasserbad, zur Abkühlung des thermoplastischen Polyurethans unter seinen Schmelzpunkt;

optional eine sich an die Kühlungseinrichtung anschließende Zerkleinerungseinrichtung zur Zerkleinerung des abgekühlten thermoplastischen Polyurethans.

Bevorzugt umfasst die Vorrichtung zur Durchführung des erfindungsgemäßen Verfahrens die folgenden, weiteren Komponenten:

einen Isocyanat-Vorratsbehälter von dem eine Isocyanatleitung zur Förderung eines Polyisocyanatstroms abgeht, die in eine erste Mischungseinrichtung mündet;

optional eine der Isocyanatleitung zugeordnete erste Fördereinrichtung zur Förderung des Polyisocyanatstroms;

optional einen an der Isocyanatleitung angeschlossenen ersten Massendurchflussmesser;

einen Polyol-Vorratsbehälter von dem eine Polyolleitung zur Förderung eines Polyolstroms abgeht, die in die erste Mischungseinrichtung mündet, wobei die Polyolleitung insbesondere stromaufwärts der ersten Mischungseinrichtung mit der Isocyanatleitung zusammengeführt wird;

optional eine der Polyolleitung zugeordnete zweite Fördereinrichtung zur Förderung des Polyolstroms;

optional einen an der Polyolleitung angeschlossenen zweiten Massendurchflussmesser;

eine Kreislaufzuführungsleitung zur Förderung eines aus der ersten Mischungseinrichtung austretenden Mischungsstroms, die in eine Kreislaufleitung zur Förderung des Kreislaufstroms und chemischen Umsetzung der Komponenten des Kreislaufstroms und der Komponenten des Mischungsstroms mündet;

wobei die Kreislaufleitung vorzugsweise in Strömungsrichtung eine zweite Mischungseinrichtung, eine temperierbare Mischungseinrichtung sowie eine temperierbare Fördereinrichtung umfasst; und wobei die Prepolymerzuführungsleitung von der Kreislaufleitung abgeht,

und wobei die Isocyanatzuführungsleitung vom Isocyanat-Vorratsbehälter oder der Isocyanatleitung abgeht.

In einer bevorzugten Ausführungsform der Vorrichtung, mündet die Polyolleitung in die erste Mischungseinrichtung, d.h. sie mündet nicht stromaufwärts der ersten Mischungseinrichtung in die Isocyanatleitung.

Bevorzugt wird als erste Fördereinrichtung und/oder als zweite Fördereinrichtung unabhängig voneinander eine Zahnringpumpe und/oder als temperierbare Fördereinrichtung eine Zahnradpumpe eingesetzt.

Bevorzugt wird als erste und/oder zweite Mischungseinrichtung und/oder als temperierbare Mischungseinrichtung unabhängig voneinander ein Statikmischer eingesetzt.

Bevorzugt besteht die Kreislaufleitung aus doppelwandigen, mit einem Heizmittel beheizbaren Leitungen, wobei bevorzugt auch die zweite Mischungseinrichtung, die temperierbare Mischungseinrichtung sowie die temperierbare Fördereinrichtung mit einem Heizmittel beheizbar sind. Dabei ist das Heizmittel bevorzugt für eine Heiz-Temperatur von 160 bis 220 °C, bevorzugter von 170 bis 190 °C, geeignet.

In einer bevorzugten Ausführungsform umfasst die Vorrichtung einen Vakuumdom, der auf dem Entgasungsschacht angeordnet ist und der Vakuumdom zum Anlegen eines Unterdrucks von 50 bis 250 mbar jeweils unter Normaldruck, geeignet ist.

In einer anderen bevorzugten Ausführungsform umfasst die Vorrichtung einen Entgasungsextruder, der in dem Entgasungschacht angeordnet ist und auf dem ein Vakuumdom positioniert ist, wobei der Vakuumdom geeignet ist für das Anlegen einen Unterdrucks von 300 bis 700 mbar unter Normaldruck. Bei dem Entgasungsextruder handelt es sich bevorzugt um einen Schneckenextruder, bei dem die Laufrichtung der Schnecken so eingestellt ist, dass sie Polymerschmelze oder thermoplastisches Polyurethan, welches durch den Unterdruck aus dem Extruder in den Entgasungsschacht gezogen wird, wieder in den Extruder befördert.

In einer weiteren Ausführungsform umfasst die Vorrichtung eine Rückhalteeinrichtung, die in dem Entgasungsschacht des Extruders angeordnet ist und auf dem Entgasungsschacht ein Vakuumdom positioniert ist, wobei der Vakuumdom geeignet ist für das Anlegen eines Unterdrucks von 50 bis 350 mbar jeweils unter Normaldruck. Bei dieser Ausführungsform ist der Extruder ein Doppelschneckenextruder und die Öffnung des Entgasungsschachtes zum Extruder weist eine längliche Form auf und ist senkrecht zur Achse der Doppelschnecken ausgebildet, so dass durch die Öffnung ein Teil beider Doppelschnecken überdeckt wird. Die Rückhalteeinrichtung ist bevorzugt so ausgestaltet, dass ihre zum Extruder orientierte Öffnung den Bereich der aufdrehenden Schnecke und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke weg in Richtung des Vakuumdoms. So prallt Polymerschmelze oder thermoplastisches Polyurethan, welches die in die Rückhalteeinrichtung gezogen wird, an dem schrägen Schacht ab und fällt wieder zurück in den Extruder und wird durch die Drehbewegung der Schnecken im Extruder wieder in den Extruder gezogen.

Bevorzugt umfasst die Vorrichtung einen Vakuumdom, der auf dem Entgasungsschacht angeordnet ist, wobei der Vakuumdom zur Anlegung eines Unterdrucks von 50 bis 250 mbar unter Normaldruck geeignet ist.

Bevorzugt ist der Extruder ein Planetwalzenextruder oder ein Schneckenextruder, wobei der Extruder bevorzugter ein gleichläufiger Doppelschneckenextruder ist.

Die Erfindung betrifft insbesondere die folgenden Ausführungsformen:

In einer ersten Ausführungsform betrifft die Erfindung ein Verfahren zur Herstellung eines thermoplastischen Polyurethans aus einem OH-funktionellen Prepolymer und einem Isocyanat mittels Reaktivextrusion umfassend die folgende Schritte:

a) Einleiten eines Prepolymerstroms enthaltend OH-funktionelle Prepolymere in einen Extruder,

b) Einleiten eines Isocyanatzuführungsstroms in den Extruder in Extruderarbeitsrichtung stromabwärts der Einleitung des Prepolymerstroms, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 105, bevorzugter von 95 bis 99,5 , zueinander stehen,

c) Umsetzen des Prepolymerstroms mit dem Isocyanatzuführungsstrom in dem Extruder unter Erhalt des thermoplastischen Polyurethans als Extrudat, wobei Gase und/ oder gasförmige Nebenprodukte der Umsetzung aus dem Extruder durch Anlegen eines Unterdrucks von 50 bis 700 mbar unter Normaldruck mittels eines an dem Extruder angeordneten Entgasungsschachtes entfernt werden, wobei der Entgasungsschacht stromabwärts der Einleitung des Isocyanatzuführungsstroms und im in Extruderarbeitsrichtung letzten Drittel des Extruders positioniert ist.

In einer zweiten Ausführungsform betrifft die Erfindung ein Verfahren nach Ausführungsform 1, wobei der Prepolymerstrom durch die folgenden Schritte erzeugt wird:

- Mischen eines Polyisocyanatstroms und eines Polyolstroms in einer ersten Mischungseinrichtung, so dass ein Mischungsstrom erhalten wird, wobei die Massenströme des Polyisocyanatstroms und des Polyolstroms so eingestellt werden, dass der Isocyanat-Index im Mischungsstrom von 50 bis 95, bevorzugt von 75 bis 85, beträgt,

- Einleiten des Mischungsstroms in einen Kreislaufstrom, der in einem Kreislauf geführt wird, wobei die Monomere des Polyisocyanatstroms und des Polyolstroms im Kreislaufstrom zu OH-funktionellen Prepolymeren reagieren,

- Abteilen eines Teilstroms vom Kreislaufstrom als Prepolymerstrom und Bereitstellung des Prepolymerstroms.

In einer dritten Ausführungsform betrifft die Erfindung ein Verfahren nach Ausführungsform 2, dadurch gekennzeichnet, dass der Polyolstrom 1,4-Butandiol, Ethandiol, 1,6-Hexandiol, 1,4-Bis-(ß-hydroxyethoxy-)benzol oder Mischungen davon enthält oder daraus besteht, wobei der Polyolstrom insbesondere 1,4-Butandiol enthält oder daraus besteht.

In einer vierten Ausführungsform betrifft die Erfindung ein Verfahren nach Ausführungsform 2 oder 3, dadurch gekennzeichnet, dass der Polyisocyanatstrom 1,6- Hexamethylendiisocyanat, 4,4-Methylendiphenyldiisocyanat, Isophorondiisocynat oder Mischungen davon enthält oder daraus besteht, wobei der Polyisocyanatstrom insbesondere 1,6-Hexamethylendiisocyanat enthält oder daraus besteht.

In einer fünften Ausführungsform betrifft die Erfindung ein Verfahren nach einer der vorstehenden Ausführungsformen, dadurch gekennzeichnet, dass der Isocyanatzuführungsstrom 1,6-Hexamethylendiisocyanat, 4,4-Methylendiphenyldiisocyanat, Isophorondiisocynat oder Mischungen davon enthält oder daraus besteht, wobei der Isocyanatzuführungsstrom insbesondere 1,6-Hexamethylendiisocyanat enthält oder daraus besteht und/oder der Polyisocyanatstrom und der Isocyanatzuführungsstrom dieselbe Zusammensetzung aufweisen.

In einer sechsten Ausführungsform betrifft die Erfindung ein Verfahren gemäß einer der Ausführungsformen 2 bis 3, wobei der Polyisocyanatstrom eine Temperatur von 20 bis 80 °C und unabhängig hiervon der Polyolstrom eine Temperatur von 35 bis 80 °C aufweist.

In einer siebten Ausführungsform betrifft die Erfindung ein Verfahren gemäß einer der Ausführungsformen 1 bis 6, wobei vor der Durchführung von Schritt a) aus dem Prepolymerstrom Gase und gasförmige Nebenprodukte entfernt werden, bevorzugt indem der Prepolymerstrom durch eine Entlüftungseinrichtung mit einem Unterdruck von 0,1 bis 10 mbar unter Normaldruck geführt wird, wobei die Entlüftungseinrichtung vorzugsweise an dem Extruder angeordnet ist.

In einer achten Ausführungsform betrifft die Erfindung ein Verfahren gemäß einer der Ausführungsformen 1 bis 7, wobei die Umsetzung in Schritt c) bei einer Temperatur von 150 °C bis 280 °C, bevorzugt von 180 °C bis 260 °C, durchgeführt wird.

In einer neunten Ausführungsform betrifft die Erfindung ein Verfahren gemäß einer der Ausführungsformen 1 bis 8, wobei der Isocyanatzuführungsstrom im in Extruderarbeitsrichtung ersten Drittel, bevorzugt im ersten Viertel, in den Extruder eingeleitet wird.

In einer zehnten Ausführungsform betrifft die Erfindung ein Verfahren gemäß einer der Ausführungsformen 1 bis 9, wobei der Entgasungsschacht im in Extruderarbeitsrichtung letzten Viertel, bevorzugt im letzten Fünftel des Extruders angeordnet ist.

In einer elften Ausführungsform betrifft die Erfindung ein Verfahren gemäß einer der Ausführungsformen 1 bis 10, wobei Schritt c) durchgeführt wird, indem

- in dem Entgasungsschacht ein Entgasungsextruder angeordnet ist, auf dem sich ein Vakuumdom befindet und ein Unterdruck von 300 bis 700 mbar unter Normaldruck angelegt wird,
  oder

- in dem Entgasungsschacht eine Rückhalteeinrichtung angeordnet und auf dem Entgasungsschacht ein Vakuumdom positioniert ist und ein Unterdruck von 50 bis 350 mbar unter Normaldruck angelegt wird,
  oder

- auf dem Entgasungsschacht ein Vakuumdom angeordnet ist und ein Unterdruck von 50 bis 250 mbar unter Normaldruck angelegt wird.

In einer zwölften Ausführungsform betrifft die Erfindung ein Verfahren gemäß einer der Ausführungsformen 1 bis 11, wobei das Verfahren die folgenden Schritte umfasst:

d) Abkühlen des dem thermoplastischen Polyurethans unter seinen Schmelzpunkt in einer Kühlungseinrichtung, sowie optional

e) Zerkleinerung des thermoplastischen Polyurethans in einer Zerkleinerungseinrichtung.

In einer dreizehnten Ausführungsform betrifft die Erfindung ein thermoplastisches Polyurethan erhältlich oder erhalten durch ein Verfahren nach einer der Ausführungsformen 1 bis 12.

In einer vierzehnten Ausführungsform betrifft die Erfindung ein thermoplastisches Polyurethan nach Ausführungsform 13, wobei das thermoplastische Polyurethan eine Oxidationsinduktionstemperatur von mindestens 190 °C gemessen mit Differentialthermoanalyse bei einer Heizrate von 20K/min nach DIN EN ISO 11357-6 (Mai 2017) aufweist, wobei das thermoplastische Polyurethan bevorzugt eine Oxidationsinduktionstemperatur gemessen mit Differentialthermoanalyse bei einer Heizrate von 20K/min nach DIN EN ISO 11357-6 (Mai 2017) von 190 °C bis 230 °C, weiter bevorzugt von 190 bis 210 °C, aufweist.

In einer fünfzehnten Ausführungsform betrifft die Erfindung ein thermoplastisches Polyurethan das eine Oxidationsinduktionstemperatur von mindestens 190 °C gemessen mit Differentialthermoanalyse bei einer Heizrate von 20K/min nach DIN EN ISO 11357-6 (Mai 2017) aufweist, wobei das thermoplastische Polyurethan bevorzugt eine Oxidationsinduktionstemperatur gemessen mit Differentialthermoanalyse bei einer Heizrate von 20K/min nach DIN EN ISO 11357-6 (Mai 2017) von 190 °C bis 230 °C, weiter bevorzugt von 190 bis 210 °C, aufweist.

In einer sechzehnten Ausführungsform betrifft die Erfindung die Verwendung eines thermoplastischen Polyurethans nach einer der Ausführungsformen 13 bis 15 in einem Formgebungsverfahren unter Aufschmelzen des thermoplastischen Polyurethans, insbesondere zur Herstellung von Innenraumbauteilen von Fahrzeugen.

In einer siebzehnten Ausführungsform betrifft die Erfindung eine Vorrichtung zur Durchführung eines Verfahrens nach einem der Ansprüche 1 bis 12, umfassend:

eine Prepolymerzuführungsleitung zur Förderung eines Prepolymerstroms, welche einlassseitig in einen Extruder mündet und wobei der Extruder bevorzugt ein gleichläufiger Doppelschneckenextruder ist;

ein in der Prepolymerzuführungsleitung vorgesehenes Druckregelventil zur Regulierung des Drucks des Prepolymerstroms;

ein in der Prepolymerzuführungsleitung angeordnetes und insbesondere stromabwärts des Druckregelventils positioniertes Dreiwegeventil, von dem eine in einen Abfallbehälter mündende Abfallleitung abgeht, über die der Prepolymerstrom insbesondere bei Inbetriebnahme, Außerbetriebnahme oder Störung der Vorrichtung ganz oder teilweise in den Abfallbehälter geführt werden kann;

eine vorzugsweise an der Einmündung der Prepolymerzuführungsleitung in den Extruder angeordnete Entlüftungseinrichtung zur Entfernung von Gasen und gasförmigen Nebenprodukten aus dem Prepolymerstrom;

eine Isocyanatzuführungsleitung zur Förderung eines Isocyanatzuführungsstroms, die in Extruderarbeitsrichtung vorzugsweise stromabwärts der Prepolymerzuführungsleitung in den Extruder mündet; wobei die Isocyanatzuführungsleitung bevorzugt im in Extruderarbeitsrichtung ersten Drittel, weiter bevorzugt im ersten Viertel, in den Extruder mündet,

optional eine der Isocyanatzuführungsleitung zugeordnete dritte Fördereinrichtung zur Förderung des Isocyanatzuführungsstroms;

optional einen an der Isocyanatzuführungsleitung angeschlossenen dritten Massendurchflussmesser;

wobei der Extruder zur Umsetzung der Komponenten des Prepolymerstroms und der Komponenten des Isocyanatzuführungsstroms zu einem thermoplastischen Polyurethan geeignet und diesem ein Entgasungsschacht zur Entfernung von Gasen und gasförmigen Nebenprodukten mittels Unterdruck von 50 bis 700 mbar unter Normaldruck aus dieser Umsetzung zugeordnet ist, wobei der Entgasungsschacht stromabwärts der Einleitung des Isocyanatzuführungsstroms und im in Extruderarbeitsrichtung letzten Drittel des Extruders angeordnet ist; bevorzugt ist der Entgasungsschacht im letzten Viertel, insbesondere im letzten Fünftel des Extruders angeordnet;

optional eine hinter dem Auslass des Extruders angeordnete Kühlungseinrichtung, vorzugsweise ein Wasserbad, zur Abkühlung des thermoplastischen Polyurethans unter seinen Schmelzpunkt;

optional eine sich an die Kühlungseinrichtung anschließende Zerkleinerungseinrichtung zur Zerkleinerung des abgekühlten thermoplastischen Polyurethans.

In einer achtzehnten Ausführungsform betrifft die Erfindung eine Vorrichtung nach Ausführungsform 17, dadurch gekennzeichnet, dass die Vorrichtung die folgenden weiteren Komponenten umfasst:

einen Isocyanat-Vorratsbehälter, von dem eine Isocyanatleitung zur Förderung eines Polyisocyanatstroms abgeht, die in eine erste Mischungseinrichtung mündet;

optional eine der Isocyanatleitung zugeordnete erste Fördereinrichtung zur Förderung des Polyisocyanatstroms;

optional einen an der Isocyanatleitung angeschlossenen ersten Massendurchflussmesser;

einen Polyol-Vorratsbehälter, von dem eine Polyolleitung zur Förderung eines Polyolstroms abgeht, die in die erste Mischungseinrichtung mündet, wobei die Polyolleitung insbesondere stromaufwärts der Mischungseinrichtung mit der Isocyanatleitung zusammengeführt wird;

optional eine der Polyolleitung zugeordnete zweite Fördereinrichtung zur Förderung des Polyolstroms;

optional einen an der Polyolleitung angeschlossenen zweiten Massendurchflussmesser;

eine Kreislaufzuführungsleitung zur Förderung eines aus der ersten Mischungseinrichtung austretenden Mischungsstroms, die in eine Kreislaufleitung zur Förderung des Kreislaufstroms und chemischen Umsetzung der Komponenten des Kreislaufstroms und der Komponenten des Mischungsstroms mündet;

wobei die Kreislaufleitung vorzugsweise in Strömungsrichtung eine zweite Mischungseinrichtung, eine temperierbare Mischungseinrichtung sowie eine temperierbare Fördereinrichtung umfasst;

und wobei die Prepolymerzuführungsleitung von der Kreislaufleitung abgeht und wobei die Isocyanatzuführungsleitung vom Isocyanat-Vorratsbehälter oder der Isocyanatleitung abgeht.

In einer neunzehnten Ausführungsform betrifft die Erfindung eine Vorrichtung nach Ausführungsform 17 oder 18, dadurch gekennzeichnet, dass

- in dem Entgasungsschacht ein Entgasungsextruder angeordnet ist und auf dem ein Vakuumdom geeignet zur Anlegung eines Unterdrucks von 300 bis 700 mbar unter Normaldruck, positioniert ist,
  oder

- in dem Entgasungsschacht eine Rückhalteeinrichtung angeordnet und auf dem Entgasungsschacht ein Vakuumdom geeignet zur Anlegung eines Unterdrucks von 50 bis 350 mbar, positioniert ist,
  oder

- auf dem Entgasungsschacht ein Vakuumdom geeignet zur Anlegung eines Unterdrucks von 50 bis 250 mbar unter Normaldruck angeordnet ist.

In einer zwanzigsten Ausführungsform betrifft die Erfindung eine Vorrichtung nach einer der Ausführungsformen 17 bis 19, wobei als erste Fördereinrichtung und/oder als zweite Fördereinrichtung unabhängig voneinander eine Zahnringpumpe und/oder als temperierbare Fördereinrichtung eine Zahnradpumpe eingesetzt wird.

In einer einundzwanzigsten Ausführungsform betrifft die Erfindung eine Vorrichtung nach einer der Ausführungsformen 17 bis 20, wobei als erste und/oder zweite Mischungseinrichtung und/oder als temperierbare Mischungseinrichtung unabhängig voneinander ein Statikmischer eingesetzt wird.

In einer zweiundzwanzigsten Ausführungsform betrifft die Erfindung eine Vorrichtung nach einer der Ausführungsformen 17 bis 21, wobei die Kreislaufleitung aus doppelwandigen, mit einem Heizmittel beheizbaren Leitungen besteht, wobei bevorzugt auch die zweite Mischungseinrichtung, die temperierbare Mischungseinrichtung sowie die temperierbare Fördereinrichtung mit einem Heizmittel beheizbar sind.

In einer dreiundzwanzigsten Ausführungsform betrifft die Erfindung eine Vorrichtung nach Ausführungsform 22, wobei das Heizmittel für eine Heiz-Temperatur von 160 bis 220 °C geeignet ist, bevorzugt von 170 bis 190 °C.

In einer vierundzwanzigsten Ausführungsform betrifft die Erfindung eine Vorrichtung nach einer der Ausführungsformen 17 bis 23, wobei der Extruder ein Planetwalzenextruder oder ein Schneckenextruder ist, wobei der Extruder bevorzugt ein gleichläufiger Doppelschneckenextruder ist.

**Beispiele**

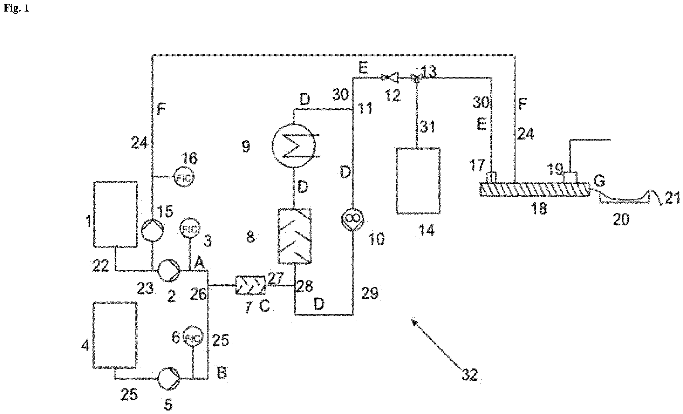

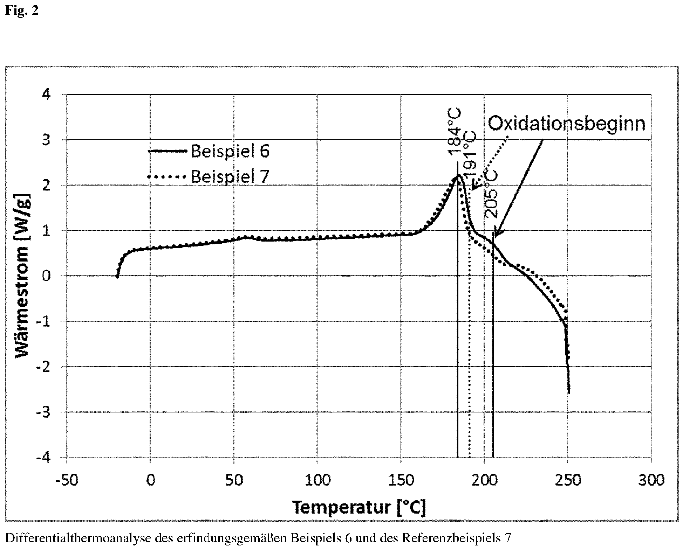

Die vorliegende Erfindung wird anhand der nachfolgenden Beispiele und der Figuren 1 und 2 näher erörtert. Darin zeigt

Fig. 1    eine Vorrichtung zur Durchführung des erfindungsgemäßen Verfahrens und

Fig. 2    ein Diagramm der Differentialthermoanalyse des erfindungsgemäßen Beispiels 6 und des Referenzbeispiels 7

In Fig. 1 ist eine Vorrichtung 32 zur Herstellung von thermoplastischem Polyurethan nach dem erfindungsgemäßen Verfahren abgebildet. Die Vorrichtung umfasst einen Isocyanat-Vorratsbehälter 1, von dem eine Isocyanatleitung 22 zur Förderung eines Polyisocyanatstroms A abgeht, die in einer ersten Mischungseinrichtung 7 mündet.

An der Isocyanatleitung 22 ist eine erste Einmündung 23 angeordnet, an der von Polyisocyanatstrom A ein Isocyanatzuführungsstrom F als Teilstrom abgeteilt wird und in einer Isocyanatzuführungsleitung 24 geführt wird. Die Isocyanatzuführungsleitung 24 setzt an der ersten Einmündung 23 an und mündet in einen Extruder 18. Der Isocyanatzuführungsleitung 24 ist eine dritte Fördereinrichtung 15 zur Förderung von Isocyanatzuführungsstrom F angeordnet und an der Isocyanatzuführungsleitung ist ein dritter Massendurchflussmesser 16 angeschlossen.

Der Isocyanatleitung 22 ist stromabwärts der ersten Einmündung 23 eine erste Fördereinrichtung 2 zur Förderung von Polyisocyanatstrom A angeordnet. An die Isocyanatleitung 22 ist ein erster Massendurchflussmesser 3 angeschlossen. Zwischen der ersten Fördereinrichtung 2 und der ersten Mischungseinrichtung 7 ist eine zweite Einmündung 26 in der Isocyanatleitung 22 angeordnet.

Des Weiteren umfasst die Vorrichtung 32 einen Polyol-Vorratsbehälter 4, von dem eine Polyolleitung 25 zur Förderung eines Polyolstroms B abgeht und in die zweite Einmündung 26 mündet. An der Polyolleitung 25 ist eine zweite Fördereinrichtung 5 angeordnet und ein zweiter Massendurchflussmesser 6 angeschlossen.

Stromabwärts der zweiten Einmündung 26 mündet die Isocyanatleitung 22 in die erste Mischungseinrichtung 7. Von der ersten Mischungseinrichtung 7 geht eine Kreislaufzuführungsleitung 27 ab, die in der dritten Einmündung 28 mündet. In der Kreislaufzuführungsleitung 27 wird ein Mischungsstrom C gefördert, der aus der ersten Mischungseinrichtung 7 austritt und an der dritten Einmündung 28 in einen Kreislaufstrom D geleitet wird. Der Kreislaufstrom D wird in einer Kreislaufleitung 29 in einem Kreislauf geführt, wobei gleichzeitig die Komponenten des Kreislaufstroms D mit den Komponenten des Mischungsstroms C chemisch umgesetzt werden. Die Kreislaufleitung 29 umfasst in Strömungsrichtung eine zweite Mischungseinrichtung 8, eine temperierbare Mischungseinrichtung 9 sowie eine temperierbare Fördereinrichtung 10. Von dem Kreislaufstrom D wird an einer vierten Einmündung 11 ein Prepolymerstrom E als Teilstrom abgeteilt. Die vierte Einmündung 11 ist zwischen der temperierbaren Mischungseinrichtung 9 und der temperierbaren Fördereinrichtung 10 vorgesehen. Von der vierten Einmündung 11 geht eine Prepolymerzuführungsleitung 30 zur Förderung von Prepolymerstrom E ab, die einlassseitig im Extruder 18 mündet. In der Prepolymerzuführungsleitung 30 ist ein Druckregelventil 12 zur Regulierung des Drucks von Prepolymerstrom E vorgesehen. Stromabwärts des Druckregelventils 12 ist in der Prepolymerzuführungsleitung 30 ein Dreiwegeventil 13 positioniert, von dem eine Abfallleitung 31 abgeht, die in einen Abfallbehälter 14 mündet.

Über die Abfallleitung 31 kann der Prepolymerstrom E bei Inbetriebnahme, Außerbetriebnahme oder Störung der Vorrichtung 32 ganz oder teilweise in den Abfallbehälter 14 geführt werden. Des Weiteren umfasst die Vorrichtung eine an der Einmündung der Prepolymerzuführungsleitung 30 in den Extruder 18 angeordnete Entlüftungseinrichtung 17 zur Entfernung von Gasen und gasförmigen Nebenprodukten aus dem Prepolymerstrom E. In Extruderarbeitsrichtung stromabwärts der Prepolymerzuführungsleitung 30 wird über die Isocyanatzuführungsleitung 24 der Isocyanatzuführungsstrom F in den Extruder 18 geleitet.

Der Extruder 18 ist zur Umsetzung der Komponenten des Prepolymerstroms E und der Komponenten des Isocyanatzuführungsstroms F zu einem thermoplastischen Polyurethan G geeignet. Dem Extruder 18 ist ein Entgasungsschacht 19 zur Entfernung von Gasen und gasförmigen Nebenprodukten mittels Unterdruck aus dieser Umsetzung zugeordnet, der stromabwärts der Einleitung des Isocyanatzuführungsstroms (F) und im in Extruderarbeitsrichtung letzten Drittel des Extruders 18 angeordnet ist. Hinter dem Auslass des Extruders 18 ist eine Kühlungseinrichtung 20 angeordnet zur Abkühlung des thermoplastischen Polyurethans G unter seinen Schmelzpunkt. An die Kühlungseinrichtung 20 schließt sich eine Zerkleinerungseinrichtung 21 zur Zerkleinerung des abgekühlten thermoplastischen Polyurethans G an.

Erfindungsgemäßes Beispiel 1: Darstellung eines Prepolymers und Reaktivextrusion

Darstellung eines Prepolymers

Aus einer 250 - Liter - Vorlage 1 für 1,6-Hexamethylendiisocyanat wurde mit Hilfe einer Zahnringpumpe 2 (Firma HNP, MZR 7255) ein Polyisocyanatstrom A bestehend aus 1,6-Hexamethylendiisocyanat zu einem Statikmischer 7 gefördert. Der Durchsatz des Polyisocyanatstroms A wurde mittels eines Massendurchflussmessers 3 (Firma Bronkhorst, Mini Cori-Flow M1X, max. Durchfluss 12 kg/h) gemessen. Die Temperatur des 1,6-Hexamethylendiisocyanats betrug dabei Raumtemperatur.

Aus einer 250 - Liter - Vorlage 4 für 1,4-Butandiol wurde mit Hilfe einer Zahnringpumpe 5 (Firma HNP, MZR 7205) ein Polyolstrom B bestehend aus 1,4-Butandiol zum Statikmischer 7 gefördert. Der Durchsatz des Polyolstroms B wurde mittels eines Massendurchflussmessers 6 (Firma Bronkhorst, Mini Cori-Flow M1X, max. Durchfluss 8 kg/h) gemessen. Die Temperatur des 1,4-Butandiols betrug 40 °C.

In dem Statikmischer 7 (Sulzer SMX, Durchmesser 6 mm, Verhältnis von Länge zu Durchmesser L/D = 10) wurden der Polyisocyanatstrom A und der Polyolstrom B miteinander gemischt, so dass ein Mischungsstrom C erhalten wurde. Die Massenströme des Polyisocyanatstroms (A) und des Polyolstroms (B) wurden so eingestellt, dass der Isocyanat-Index im Mischungsstrom (C) 78 betrug.

Mischungsstrom C wurde über eine Einmündung 28 in die Kreislaufleitung 29 geleitet, in dem ein Kreislaufstrom D in einem Kreislauf geführt wurde. Stromabwärts der Einmündung 28 wurde der Kreislaufstrom D in einen Statikmischer 8 (Statikmischer äquivalent zu Sulzer SMX, Innendurchmesser 34 mm, L/D=20) geführt. Die Temperatur des Prepolymerstromes D betrug 182 °C.

Stromabwärts des Statikmischers 8 wurde der Kreislaufstrom D in einen temperierbaren statischen Mischer 9 geführt. Dort fand die Oligomerisierung des Kreislaufstroms D mit Mischungsstrom C zum großen Teil statt und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer 9 trat der Kreislaufstrom D mit einer Temperatur von 183 °C aus. Stromabwärts des temperierbaren statischen Mischers 9 wurde an einer Einmündung 11 ein Prepolymerstrom E aus dem Kreislaufstrom D abgeteilt und der Kreislaufstrom D weiter zu einer Zahnradpumpe 10 geführt. Der Prepolymerstrom E wurde in einen Extruder 18 geleitet.

Der Druck des Kreislaufstroms D wurde an einer Zahnradpumpe 10 erhöht. Die Zahnradpumpe 10 (Firma Witte Chem 25,6-3) hatte ein Volumen pro Umdrehung von 25,6 Kubikzentimeter und eine Drehzahl von 50 pro Minute. Der Kreislaufstorm D wurde stromabwärts der Pumpe an Einmündung 28 mit Mischungsstrom C vereinigt, wie bereits beschrieben.

Die Kreislaufleitung 29 bestand aus doppelwandig ausgeführten Rohrleitungen, die mit Thermoöl beheizt waren. Die Heizmitteltemperatur betrug 182 °C. Der Statikmischer 8 und die Zahnradpumpe 10 bestanden aus Apparaten, die mit Thermoöl beheizt waren. Die Heizmitteltemperatur betrug 182 °C.

Herstellung von thermoplastischem Polyurethan durch Reaktivextrusion

Die Reaktivextrusion wurde in einem Extruder 18 bei einer Temperatur von 200 °C und einer Drehzahl von 66 Umdrehungen pro Minute durchgeführt. Der Extruder 18 war ein ZSK 26 MC der Firma Coperion, mit einem Schneckendurchmesser von 26 mm und einem Länge zu Durchmesser Verhältnis von 36 bis 40.

An dem Extruder 18 befand sich eine Entlüftung 17, die bei ca. 1 mbar Unterdruck gegenüber dem Normaldruck betrieben wurde und in der Prepolymerstrom E von eventuell mit dem Polyisocyanatstrom A und dem Polyolstrom B eingeschleppten Inertgasen und möglichen gasförmigen Reaktionsprodukten befreit wurde.

Aus Vorlage 1 wurde mit Hilfe einer Mikrozahnringpumpe 15 (MZR 6355 der Firma HNP) ein Isocyanatzuführungsstrom F bestehend aus 1,6-Hexamethylendiisocyanat entnommen. Der Durchsatz des Isocyanatzuführungsstroms F wurde mittels eines Massendurchflussmessers 16 (Firma Bronkhorst, Mini Cori-Flow, M1X, maximaler Durchfluss 2 kg/h) gemessen. Die Temperatur des 1,6-Hexamethylendiisocyanat betrug Raumtemperatur. Der Isocyanatzuführungsstrom F wurde stromabwärts des Prepolymerstroms E in den Extruder 18 geleitet. In dem Extruder 18 wurde der Prepolymerstrom E mit dem Isocyanatzuführungsstrom F bei einem Isocyanatindex von 99 zu einem thermoplastischen Polyurethan G umgesetzt.

Im in Durchflussrichtung betrachtet letzten Drittel des Extruders 18 war eine Entgasung 19 angeordnet, an der das thermoplastische Polyurethan G anfangs bei 100 mbar unter Normaldruck mit Hilfe eines Vakuumdoms, der auf einem Entgasungsschacht des Extruders angeordnet war, von flüchtigen Bestandteilen befreit wurde. Das thermoplastische Polyurethan G wurde nach dem Austritt aus dem Extruder 18 durch zwei Düsen in einem mit deionisierten Wasser (VE-Wasser) gefüllten Wasserbad 20 abgekühlt und durch einen Granulator 21 zu Granulat zerschnitten. Bei dem erfindungsgemäßen Beispiel 1 musste bei dem anfangs eingestellten Vakuum von 100mbar in den ersten 5h der Extruder aufgrund sich einstellender instabiler Polymerstränge 3x abgefahren werden. Nach Leerfahren des Extruders konnte jeweils neu angefahren und produziert werden. Allerdings nahmen die Produktionszeiten bis zum erneuten Einstellen instabiler Stränge drastisch ab von 120 auf 25min. Nach dem vierten Wiederanfahren konnte durch Anheben des Vakuums auf 200mbar eine längere Produktionsphase realisiert werden, die nach 95min wegen Beendigung der zur Verfügung stehenden Versuchszeit abgebrochen werden musste.

Tabelle 1: Stoffströme bei der Herstellung des TPU in Beispiel 1 und in den folgenden Beispielen 2 bis 7

|  | Beispiele 1-5 | Beispiele 6 u. 7 |
|---|---|---|
|  | [kg/h] | [kg/h] |
| Strom A (HDI) | 2,911 | 4,590 |
| Strom B (BDO) | 2,000 | 3,000 |
| Strom F (HDI) | 0,784 | 0,980 |
| Strom E (Prepolymer) | 4,911 | 7,590 |
| Strom D (Kreislauf) | 75-80 | 112-120 |

Beispiele zur Standzeit und zum Strangabriss:

Erfindungsgemäßes Beispiel 2 mit Entgasung mit Hilfe eines Vakuumdoms auf dem Entgasungsschacht

Es wurde das oben beschriebene Reaktivextrusionsverfahren durchgeführt, wobei ein Vakuum von 200 mbar unter Normaldruck angewendet wurde. Die Reaktivextrusion konnte für 4,5 h durchgeführt werden, ohne dass die aus dem Extruder 18 ausgepressten Extrudatstränge inhomogen waren und infolgedessen rissen oder abbrachen. Des Weiteren wurde kein Extrudat in den Entgasungsschacht gezogen. Erst als nach 4,5h ein Vakuum von 250mbar eingestellt wurde, um den instabil werdenden Strängen entgegen zu wirken, verstopfte der Vakuumdom und es musste abgefahren werden.

Erfindungsgemäßes Beispiel 3 mit Rückhalteeinrichtung im Entgasungsschacht

Es wurde TPU nach der oben beschriebenen Reaktivextrusion hergestellt, wobei im Entgasungsschacht eine Rückhalteeinrichtung angeordnet war. Dabei war die Öffnung des Entgasungsschachtes zum Extruder so ausgestaltet, das sie eine längliche Form aufwies und senkrecht zur Achse der Doppelschnecken ausgebildet war, so dass durch die Öffnung ein Teil beider Doppelschnecken überdeckt wurde. Die Rückhalteeinrichtung war so ausgestaltet, dass ihre zum Extruder orientierte Öffnung den Bereich der aufdrehenden Schnecke und des Zwickels überdeckte, so dass in diesem Bereich keine Polymerschmelze oder thermoplastisches Polyurethan, welches durch den Unterdruck aus dem Extruder in den Entgasungsschacht gezogen wird, eindringen konnte. Über dem nicht überdeckten Bereich der Öffnung der Rückhalteeinrichtung führte ein Schacht schräg gegen die Drehrichtung der nicht überdeckten Schnecke weg in Richtung des Vakuumdoms. Ein Querschnitt der zuvor beschriebenen Rückhalteeinrichtung ist in dem Lehrbuch Klemens Kohlgrüber: Der Doppelschneckenextruder, 2. Auflage, Hanser-Verlag, 2016, ISBN: 978-3-446-43361-8, auf S. 743 als Form "A" abgebildet.

Die Entgasung wurde mit einem Vakuum von 300 mbar unter Normaldruck durchgeführt. Die Reaktivextrusion konnte mit diesem Verfahren für 6,75 h durchgeführt werden, wobei die ausgepressten Extrudatstränge nicht abbrachen oder abrissen. Darüber hinaus trat kein Extrudat in die Rückhalteeinrichtung oder in den Vakuumdom.

Erfindungsgemäßes Beispiel 4 mit Entgasungsextruder im Entgasungsschacht

Bei der Reaktivextrusion mit dem oben beschriebenen Verfahren wurde ein Entgasungsextruder im Entgasungsschacht angeordnet. Dazu wurde an den Entgasungsschacht 19 des Extruders 18 ein Entgasungsextruder ZS-EG 25 der Fa. Coperion angeflanscht, dessen Wellen bis dicht an die Wellen des Extruders 18 heranragten. An der dem Extruder 18 gegenüberliegenden Öffnung des Entgasungsextruders war ein Vakuumdom angeordnet und über eine Kühlfalle, die mit Trockeneis gekühlt wurde, mit einer Wasserring-Vakuumpumpe verbunden, über die der Unterdruck im Vakuumdom eingestellt wurde. Der Entgasungsextruder wurde mit einer Drehzahl von 215Upm betrieben und war so eingestellt, dass er Polymerschmelze oder thermoplastisches Polyurethan, welches durch den Unterdruck aus dem Extruder in den Entgasungsschacht gezogen wurde, wieder in den Extruder beförderte.

Die Entgasung wurde mit einem Vakuum von 500 mbar unter Normaldruck durchgeführt. Die konnte so Reaktivextrusion für 4,25 h durchgeführt werden, ohne dass die Extrudatstränge abbrachen oder abrissen. Auch trat kein Extrudat in den Seitenextruder oder den Vakuumdom aus.

Erfindungsgemäßes Beispiel 6 mit Entgasungsextruder im Entgasungsschacht

Es wurde wie im Beispiel 4 gefahren, aber mit einer Drehzahl des Entgasungsextruders von 250Upm und 600mbar Vakuum. Die Drehzahl des Extruders 18 betrug 180Upm.

Referenzbeispiel 5 und 7 ohne Entgasungsverfahren

Es wurde die oben beschriebene Reaktivextrusion durchgeführt, wobei keine Entgasung der im Extruder befindlichen Polymerschmelze oder des thermoplastischen Polyurethans durchgeführt wurde. Nach 0,75 h musste die Reaktivextrusion unterbrochen werden, weil die ausgepressten Extrudatstränge abbrachen. Der Extruder wurde gereinigt und das Herstellungsverfahren wieder aufgenommen und nach weiteren 1,25 h musste erneut abgebrochen werden. Insgesamt konnte die Reaktivextrusion nur 2 h von 3 h durchgeführt werden.

Zusammenfassung der Beispiele zur Standzeit und zum Strangabriss

Die Erkenntnisse aus den obigen Beispielen wurden auf eine (theoretische) Laufzeit von vier Stunden normiert.

Die Ausbeute gibt die Abfallanteile während der reinen Produktionszeit an. Demnach würden bei der Durchführung einer Reaktivextrusion unter den Bindungen der erfindungsgemäßen Beispiele 1 bis 4 und des Referenzbeispiels 5 für eine Dauer von 4 Stunden die folgenden Ergebnisse erzielt:

|  | Bsp. | Laufzeit/ Gesamtzeit [%] | Unterbrechungen [Anzahl in 4h] | Ausbeute |
|---|---|---|---|---|
| Erfind. | 1 | 72% | 1,74 | 67% |
| Erfind. | 2 | 92% | 0,60 | 85% |
| Erfind. | 3 | 100% | 0,00 | 100% |
| Erfind. | 4 | 100% | 0,00 | 100% |
| Referenz | 5 | 71% | 2,74 | 65% |

Die Beispiele zeigen, dass mit Hilfe des erfindungsgemäßen Verfahrens ein Abreißen der aus dem Extruder ausgepressten Polymersträge verringert wird im Vergleich zu herkömmlichen Verfahren ohne Entgasung. Außerdem konnte im Vergleich zum Referenzbeispiel der Zeitraum verlängert werden, in dem eine Reaktivextrusion durchgeführt werden kann, ohne dass das Herstellungsverfahren aufgrund einer Häufung der Abrisse der ausgepressten Polymerstränge unterbrochen und der Extruder neu angefahren werden muss. Darüber hinaus ist die Ausbeute, also die Menge an Produkt im Verhältnis zu den eingebrachten Edukten, größer als bei dem Referenzbeispiel. Bei den erfindungsgemäßen Verfahren 1 und 2 wurde das Potential noch nicht ganz ausgeschöpft, weil bei der Ausgestaltung des Entgasungsdoms ein Verstopfen des Doms zu befürchten war und deshalb lediglich ein Vakuum von 100 bzw. 200mbar angelegt wurde. Aber auch damit konnte bereits die Produktionszeit verlängert werden und es musste weniger häufig unterbrochen werden.

Beispiele zur thermooxidativen Stabilität

Die Polyurethane aus den Beispielen 6 und 7 wurden mit folgender Untersuchung auf ihre thermooxidative Stabilität getestet.

Bestimmung der thermooxidative Stabilität und der Oxidationsinduktionstemperatur OITE

Die thermooxidative Stabilität und Oxidationsinduktionstemperatur OITE des Materials wurden nach DIN EN ISO 11357-6 (Mai 2017) bestimmt, wobei die Probenkörper nicht mit einem Mikrotom präpariert wurden, sondern indem eine entsprechende Einwaage in einem Tiegel vermessen wurde.

Differentialthermoanalyse (PCS)

Die Oxidationsinduktionstemperatur (OITE) wurde mittels Differentialthermoanalyse (DCS) im Temperaturbereich von 20°C bis 250°C und einer Heizrate von 20K/min gemessen. OITE ist die Temperatur, bei der die Oxidationsreaktion beginnt. Die Messzelle wurde während der gesamten Messung mit Sauerstoffgas überströmt.

| | |
|---|---|
| Gerät: | DSC Q2000 (Fa. TA Instruments) |
| Messung : | keine Vorkonditionierung der Probe (Anlieferung), ca. 6 mg Einwaage, offener Tiegel, Spülung der Messzelle mit Sauerstoff |
| OITE: | eine Aufheizung von -20 °C bis 250°C, Heizrate 20 K/min, Auswertung der Oxidationsinduktionstemperatur OITE als Beginn der exothermen Abweichung der Messkurve von der Grundlinie |

Interpretation der Messergebnisse

Bei der Differentialthermoanalyse zeigt ein Abfall der Messkurven nach unten bei dem durchgeführten Messverfahren, dass eine exotherme Reaktion stattgefunden hat, hier eine Oxidation. Es ist erkennbar, dass die Messkurve des TPU aus dem erfindungsgemäßen Beispiel 6 weniger steil abfällt als diejenige des TPU aus Beispiel 7. Daraus kann geschlossen werden, dass die Oxidationsreaktion langsamer abläuft und das TPU aus dem erfindungsgemäßen Beispiel 6 eine höhere Oxidationsstabilität aufweist als das TPU aus Beispiel 7. Außerdem betrug die Oxidationsinduktionstemperatur des TPU aus dem erfindungsgemäßen Beispiel 6 ca. 205 °C, während die Oxidationsinduktionstemperatur des PTU aus Referenzbeispiel 7 über zehn Grad niedriger bei ca. 191 °C lag, siehe Fig. 2.

Die erhöhte thermooxidative Stabilität wurde durch ein Anlegen von Vakuum (600mbar, abs) erzielt, wodurch zunächst die spröden Stränge abgewehrt werden konnten. Die schlechtere Stabilität tritt bei den spröden Strängen auf.

**Bezugszeichenliste**

| | |
|---|---|
| A | Polyisocyanatstrom |
| B | Polyolstrom |
| C | Mischungsstrom |
| D | Kreislaufstrom |
| E | Prepolymerstrom |
| F | Isocyanatzuführungsstrom |
| G | thermoplastisches Polyurethan |
| 1 | Isocyanat-Vorratsbehälter |
| 2 | erste Fördereinrichtung |
| 3 | erster Massendurchflussmesser |
| 4 | Polyol-Vorratsbehälter |
| 5 | zweite Fördereinrichtung |
| 6 | zweiter Massendurchflussmesser |
| 7 | erste Mischungseinrichtung |
| 8 | zweite Mischungseinrichtung |
| 9 | temperierbare Mischungseinrichtung |
| 10 | temperierbare Fördereinrichtung |
| 11 | vierte Einmündung |
| 12 | Druckregelventil |
| 13 | Dreiwegeventil |
| 14 | Abfallbehälter |
| 15 | dritte Fördereinrichtung |
| 16 | dritter Massendurchflussmesser |
| 17 | Entlüftungseinrichtung |
| 18 | Extruder |
| 19 | Entgasungsschacht |
| 20 | Kühlungseinrichtung |
| 21 | Zerkleinerungseinrichtung |
| 22 | Isocyanatleitung |
| 23 | erste Einmündung |
| 24 | Isocyanatzuführungsleitung |
| 25 | Polyolleitung |
| 26 | zweite Einmündung |
| 27 | Kreislaufzuführungsleitung |
| 28 | dritte Einmündung |
| 29 | Kreislaufleitung |
| 30 | Prepolymerzuführungsleitung |
| 31 | Abfallleitung |
| 32 | Vorrichtung |

**Patentansprüche**

1. Verfahren zur Herstellung eines thermoplastischen Polyurethans (G) aus einem OH-funktionellen Prepolymer und einem Isocyanat mittels Reaktivextrusion umfassend die folgende Schritte:

   a) Einleiten eines Prepolymerstroms (E) enthaltend OH-funktionelle Prepolymere in einen Extruder (18),
   b) Einleiten eines Isocyanatzuführungsstroms (F) in den Extruder (18) in Extruderarbeitsrichtung stromabwärts der Einleitung des Prepolymerstroms (E), wobei die Einleitung in der Weise erfolgt, dass die im Prepolymerstrom (E) enthaltenen OH-funktionellen Prepolymere und das im Isocyanatzuführungsstrom (F) enthaltene Polyisocyanat in einem Isocyanat-Index von 85 bis 105, bevorzugter von 95 bis 99,5, zueinander stehen,

c) Umsetzen des Prepolymerstroms (E) mit dem Isocyanatzuführungsstrom (F) in dem Extruder (18) unter Erhalt des thermoplastischen Polyurethans (G) als Extrudat, wobei Gase und/oder gasförmige Nebenprodukte der Umsetzung aus dem Extruder (18) durch Anlegen eines Unterdrucks von 50 bis 700 mbar unter Normaldruck mittels eines an dem Extruder (18) angeordneten Entgasungsschachtes (19) entfernt werden, wobei der Entgasungsschacht (19) stromabwärts der Einleitung des Isocyanatzuführungsstroms (F) und im in Extruderarbeitsrichtung letzten Drittel des Extruders (18) positioniert ist.

2. Verfahren nach Anspruch 1, **dadurch gekennzeichnet, dass** der Prepolymerstrom (E) durch die folgenden Schritte erzeugt wird:

- Mischen eines Polyisocyanatstroms (A) und eines Polyolstroms (B) in einer ersten Mischungseinrichtung (7), so dass ein Mischungsstrom (C) erhalten wird, wobei die Massenströme des Polyisocyanatstroms (A) und des Polyolstroms (B) so eingestellt werden, dass der Isocyanat-Index im Mischungsstrom (C) von 50 bis 95, bevorzugt von 75 bis 85 beträgt,
- Einleiten des Mischungsstroms (C) in einen Kreislaufstrom (D), der in einem Kreislauf geführt wird, wobei die Monomere des Polyisocyanatstroms (A) und des Polyolstroms (B) im Kreislaufstrom (D) zu OH-funktionellen Prepolymeren reagieren,
- Abteilen eines Teilstroms vom Kreislaufstrom (D) als Prepolymerstrom (E) und Bereitstellung des Prepolymerstroms (E).

3. Verfahren nach Anspruch 2, **dadurch gekennzeichnet, dass**

a. der Polyolstrom (B) 1,4-Butandiol, Ethandiol, 1,6-Hexandiol, 1,4-Bis-(β-hydroxyethoxy-)benzol oder Mischungen davon enthält oder daraus besteht, wobei der Polyolstrom (B) insbesondere 1,4-Butandiol enthält oder daraus besteht und/ oder

b. der Polyisocyanatstrom (A) 1,6- Hexamethylendiisocyanat, 4,4-Methylendiphenyldiisocyanat, Isophorondiisocynat oder Mischungen davon enthält oder daraus besteht, wobei der Polyisocyanatstrom (A) insbesondere 1,6-Hexamethylendiisocyanat enthält oder daraus besteht.

4. Verfahren nach einem der vorstehenden Ansprüche, **dadurch gekennzeichnet, dass** der Isocyanatzuführungsstrom (F) 1,6- Hexamethylendiisocyanat, 4,4-Methylendiphenyldiisocyanat, Isophorondiisocynat oder Mischungen davon enthält oder daraus besteht, wobei der Isocyanatzuführungsstrom (F) insbesondere 1,6-Hexamethylendiisocyanat enthält oder daraus besteht und/oder der Polyisocyanatstrom (A) und der Isocyanatzuführungsstrom (F) dieselbe Zusammensetzung aufweisen.

5. Verfahren nach einem der vorstehenden Ansprüche, **dadurch gekennzeichnet, dass** vor der Durchführung von Schritt a) aus dem Prepolymerstrom (E) Gase und gasförmige Nebenprodukte entfernt werden, bevorzugt indem der Prepolymerstrom (E) durch eine Entlüftungseinrichtung (17) mit einem Unterdruck von 0,1 bis 10 mbar unter Normaldruck geführt wird, wobei die Entlüftungseinrichtung (17) vorzugsweise an dem Extruder (18) angeordnet ist.

6. Verfahren nach einem der vorstehenden Ansprüche, **dadurch gekennzeichnet, dass** die Umsetzung in Schritt c) bei einer Temperatur von 150 °C bis 280 °C, bevorzugt von 180 °C bis 260 °C durchgeführt wird.

7. Verfahren nach einem der vorstehenden Ansprüche, **dadurch gekennzeichnet, dass** der Isocyanatzuführungsstrom (F) im in Extruderarbeitsrichtung ersten Drittel, bevorzugt im ersten Viertel, in den Extruder (18) eingeleitet wird.

8. Verfahren nach einem der vorstehenden Ansprüche, **dadurch gekennzeichnet, dass** der Entgasungsschacht (19) im in Extruderarbeitsrichtung letzten Viertel, bevorzugt im letzten Fünftel, des Extruders angeordnet ist.

9. Verfahren nach einem der vorstehenden Ansprüche, **dadurch gekennzeichnet, dass** Schritt c) durchgeführt wird, indem

- in dem Entgasungsschacht (19) ein Entgasungsextruder angeordnet ist, auf dem sich ein Vakuumdom befindet und ein Unterdruck von 300 bis 700 mbar unter Normaldruck angelegt wird, oder
- in dem Entgasungsschacht (19) eine Rückhalteeinrichtung angeordnet und auf dem Entgasungsschacht ein Vakuumdom positioniert ist und ein Unterdruck von 50 bis 350 mbar unter Normaldruck angelegt wird,

oder

- auf dem Entgasungsschacht (19) ein Vakuumdom angeordnet ist und ein Unterdruck von 50 bis 250 mbar unter Normaldruck angelegt wird.

10. Verfahren nach einem der vorstehenden Ansprüche, **dadurch gekennzeichnet, dass** das Verfahren die weiteren folgenden Schritte umfasst:

d) Abkühlen des dem thermoplastischen Polyurethans (G) unter seinen Schmelzpunkt in einer Kühlungseinrichtung (20), sowie optional
e) Zerkleinerung des thermoplastischen Polyurethans (G) in einer Zerkleinerungseinrichtung (21).

11. Thermoplastisches Polyurethan erhältlich oder erhalten durch ein Verfahren nach einem der Ansprüche 1 bis 10, wobei das thermoplastische Polyurethan insbesondere eine Oxidationsinduktionstemperatur von mindestens 190 °C gemessen mit Differentialthermoanalyse bei einer Heizrate von 20K/min nach DIN EN ISO 11357-6 (Mai 2017) aufweist, wobei das thermoplastische Polyurethan bevorzugt eine Oxidationsinduktionstemperatur gemessen mit Differentialthermoanalyse bei einer Heizrate von 20K/min nach DIN EN ISO 11357-6 (Mai 2017) von 190 °C bis 230 °C, weiter bevorzugt von 190 bis 210 °C, aufweist.

12. Thermoplastisches Polyurethan das eine Oxidationsinduktionstemperatur von mindestens 190 °C gemessen mit Differentialthermoanalyse bei einer Heizrate von 20K/min nach DIN EN ISO 11357-6 (Mai 2017) aufweist, wobei das thermoplastische Polyurethan bevorzugt eine Oxidationsinduktionstemperatur gemessen mit Differentialthermoanalyse bei einer Heizrate von 20K/min nach DIN EN ISO 11357-6 (Mai 2017) von 190 °C bis 230 °C, weiter bevorzugt von 190 bis 210 °C, aufweist.

13. Verwendung eines thermoplastischen Polyurethans nach einem der Ansprüche 11 oder 12 in einem Formgebungsverfahren unter Aufschmelzen des thermoplastischen Polyurethans, insbesondere zur Herstellung von Innenraumbauteilen von Fahrzeugen.

14. Vorrichtung zur Durchführung eines Verfahrens nach einem der Ansprüche 1 bis 10, umfassend:

eine Prepolymerzuführungsleitung (30) zur Förderung eines Prepolymerstroms (E), welche einlassseitig in einen Extruder (18) mündet und wobei der Extruder bevorzugt ein gleichläufiger Doppelschneckenextruder ist;
ein in der Prepolymerzuführungsleitung (30) vorgesehenes Druckregelventil (12) zur Regulierung des Drucks des Prepolymerstroms (E);
ein in der Prepolymerzuführungsleitung (30) angeordnetes und insbesondere stromabwärts des Druckregelventils (12) positioniertes Dreiwegeventil (13), von dem eine in einen Abfallbehälter (14) mündende Abfallleitung (31) abgeht, über die der Prepolymerstrom (E) insbesondere bei Inbetriebnahme, Außerbetriebnahme oder Störung der Vorrichtung ganz oder teilweise in den Abfallbehälter (14) geführt werden kann;
eine vorzugsweise an der Einmündung der Prepolymerzuführungsleitung (30) in den Extruder (18) angeordnete Entlüftungseinrichtung (17) zur Entfernung von Gasen und
gasförmigen Nebenprodukten aus dem Prepolymerstrom (E);
eine Isocyanatzuführungsleitung (24) zur Förderung eines Isocyanatzuführungsstroms (F),
die in Extruderarbeitsrichtung vorzugsweise stromabwärts der Prepolymerzuführungsleitung (30) in den Extruder (18) mündet; wobei die Isocyanatzuführungsleitung (24) bevorzugt im in Extruderarbeitsrichtung ersten Drittel, weiter bevorzugt im ersten Viertel, in den Extruder (18) mündet,
wobei der Extruder (18) zur Umsetzung der Komponenten des Prepolymerstroms (E) und
der Komponente des Isocyanatzuführungsstroms (F) zu einem thermoplastischen Polyurethan (G) geeignet und diesem ein Entgasungsschacht (19) zur Entfernung von Gasen und gasförmigen Nebenprodukten mittels Unterdruck von 50 bis 700 mbar unter Normaldruck aus dieser Umsetzung zugeordnet ist, wobei der Entgasungsschacht (19) stromabwärts der Einleitung des Isocyanatzuführungsstroms (F) und im in Extruderarbeitsrichtung letzten Drittel des Extruders (18) angeordnet ist; bevorzugt ist der Entgasungsschacht im letzten Viertel, insbesondere im letzten Fünftel des Extruders angeordnet;
optional eine hinter dem Auslass des Extruders (18) angeordnete Kühlungseinrichtung (20),
vorzugsweise ein Wasserbad, zur Abkühlung des thermoplastischen Polyurethans (G) unter seinen Schmelzpunkt;
optional eine sich an die Kühlungseinrichtung (20) anschließende Zerkleinerungseinrichtung (21) zur Zerkleinerung des abgekühlten thermoplastischen Polyurethans (G),
wobei die Vorrichtung vorzugsweise die folgenden weiteren Komponenten umfasst:

einen Isocyanat-Vorratsbehälter (1), von dem eine Isocyanatleitung (22) zur Förderung eines Polyisocyanatstroms (A) abgeht, die in eine erste Mischungseinrichtung (7) mündet;

einen Polyol-Vorratsbehälter (4), von dem eine Polyolleitung (25) zur Förderung eines Polyolstroms (B) abgeht, die in die erste Mischungseinrichtung (7) mündet, wobei die Polyolleitung (25) insbesondere stromaufwärts der Mischungseinrichtung (7) mit der Isocyanatleitung (22) zusammengeführt wird;

eine Kreislaufzuführungsleitung (27) zur Förderung eines aus der ersten Mischungseinrichtung (7) austretenden Mischungsstroms (C), die in eine Kreislaufleitung (29) zur Förderung des Kreislaufstroms (D) und chemischen Umsetzung der Komponenten des Kreislaufstroms (D) und der Komponenten des Mischungsstroms (C) mündet;

wobei die Kreislaufleitung (29) vorzugsweise in Strömungsrichtung eine zweite Mischungseinrichtung (8), eine temperierbare Mischungseinrichtung (9) sowie eine temperierbare Fördereinrichtung (10) umfasst;

und wobei die Prepolymerzuführungsleitung (30) von der Kreislaufleitung (29) abgeht und wobei die Isocyanatzuführungsleitung (24) vom Isocyanat-Vorratsbehälter (1) oder der Isocyanatleitung (22) abgeht.

**15.** Vorrichtung nach Anspruch 14, **dadurch gekennzeichnet, dass**

- in dem Entgasungsschacht (19) ein Entgasungsextruder angeordnet ist und auf dem ein Vakuumdom geeignet zur Anlegung eines Unterdrucks von 300 bis 700 mbar unter Normaldruck positioniert ist, oder

- in dem Entgasungsschacht (19) eine Rückhalteeinrichtung angeordnet und auf dem Entgasungsschacht ein Vakuumdom geeignet zur Anlegung eines Unterdrucks von 50 bis 350 mbar positioniert ist, oder

- auf dem Entgasungsschacht (19) ein Vakuumdom geeignet zur Anlegung eines Unterdrucks von 50 bis 250 mbar unter Normaldruck angeordnet ist.

**Fig. 1**

Fig. 2

Differentialthermoanalyse des erfindungsgemäßen Beispiels 6 und des Referenzbeispiels 7

Europäisches
Patentamt

European
Patent Office

Office européen
des brevets

# EUROPÄISCHER RECHERCHENBERICHT

**Nummer der Anmeldung**

EP 19 21 6799

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | AMIN KHAIRATUN NAJWA MOHD ET AL: "Scalable processing of thermoplastic polyurethane nanocomposites toughened with nanocellulose", CHEMICAL ENGINEERING JOURNAL, ELSEVIER, AMSTERDAM, NL, Bd. 302, 14. Mai 2016 (2016-05-14), Seiten 406-416, XP029686672, ISSN: 1385-8947, DOI: 10.1016/J.CEJ.2016.05.067 | 11 | INV. B29B7/84 B29C48/29 B29C48/76 B29C48/92 B29C67/24 |
| Y | * Absatz [02.4] - Absatz [2.5.3]; Abbildungen 1,S2; Tabelle 1 * ----- | 1,4-8, 10,13 | |
| Y | DE 10 2010 025995 A1 (RUST & MITSCHKE ENTEX [DE]) 5. Januar 2012 (2012-01-05) * Absätze [0003], [0013], [0021], [0023], [0026], [0028]; Abbildung 2 * ----- | 1,4-8, 10,13 | |
| Y | US 2009/198036 A1 (DUFFY SEAN G [US]) 6. August 2009 (2009-08-06) * Absätze [0004], [0029]; Ansprüche 1-5; Abbildung 1; Tabelle 8 * ----- | 1,6-8, 10,13 | |
| Y | EP 0 534 295 A2 (BASF AG [DE]) 31. März 1993 (1993-03-31) * Seite 5, Zeile 41 - Zeile 46; Beispiel 1 * ----- | 1,6-8, 10,13 | RECHERCHIERTE SACHGEBIETE (IPC) B29B B29C B29K B01J C08G |
| A | DE 10 2008 009735 A1 (BASF SE [DE]) 20. August 2009 (2009-08-20) * Absätze [0062], [0123], [0126], [0158]; Abbildung 1 * * Absätze [0019], [0042], [0060] * ----- | 9,14,15 | |
| A | DE 25 49 372 A1 (BAYER AG) 5. Mai 1977 (1977-05-05) * das ganze Dokument * ----- | 1-15 | |

-/--

Der vorliegende Recherchenbericht wurde für alle Patentansprüche erstellt

| Recherchenort | Abschlußdatum der Recherche | Prüfer |
|---|---|---|
| München | 27. Mai 2020 | Mans, Peter |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
Dokument

EPO FORM 1503 03.82 (P04C03)

| | Europäisches Patentamt<br>European Patent Office<br>Office européen des brevets | **EUROPÄISCHER RECHERCHENBERICHT** | **Nummer der Anmeldung**<br>EP 19 21 6799 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2012/029145 A1 (BROWN WADE H [US]) 2. Februar 2012 (2012-02-02) * Absätze [0144], [0250] - Absätze [0251], [0275], [0284]; Abbildung 1 * ----- | 1,10 | |
| A | V. W. A. VERHOEVEN ET AL: "The Reactive Extrusion of Thermoplastic Polyurethane and the Effect of the Depolymerization Reaction", INTERNATIONAL POLYMER PROCESSING, Bd. 21, Nr. 3, 1. Juli 2006 (2006-07-01), Seiten 295-308, XP055698639, DE ISSN: 0930-777X, DOI: 10.3139/217.0101 * das ganze Dokument * ----- | 1,11 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 27. Mai 2020 | Mans, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT**
**ÜBER DIE EUROPÄISCHE PATENTANMELDUNG NR.**

EP 19 21 6799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2020

| Im Recherchenbericht angeführtes Patentdokument | Datum der Veröffentlichung | Mitglied(er) der Patentfamilie | Datum der Veröffentlichung |
|---|---|---|---|
| DE 102010025995 A1 | 05-01-2012 | KEINE | |
| US 2009198036 A1 | 06-08-2009 | AU 2008345105 A1 | 09-07-2009 |
| | | CA 2710918 A1 | 09-07-2009 |
| | | CN 101952335 A | 19-01-2011 |
| | | EP 2231737 A1 | 29-09-2010 |
| | | JP 5879034 B2 | 08-03-2016 |
| | | JP 2011508067 A | 10-03-2011 |
| | | RU 2010127973 A | 10-02-2012 |
| | | US 2009198036 A1 | 06-08-2009 |
| | | WO 2009086459 A1 | 09-07-2009 |
| EP 0534295 A2 | 31-03-1993 | AT 146196 T | 15-12-1996 |
| | | CA 2079245 A1 | 27-03-1993 |
| | | DE 4132015 A1 | 01-04-1993 |
| | | DE 59207659 D1 | 23-01-1997 |
| | | DK 0534295 T3 | 30-12-1996 |
| | | EP 0534295 A2 | 31-03-1993 |
| | | ES 2095377 T3 | 16-02-1997 |
| | | JP H05255471 A | 05-10-1993 |
| | | US 5247049 A | 21-09-1993 |
| DE 102008009735 A1 | 20-08-2009 | DE 102008009735 A1 | 20-08-2009 |
| | | EP 2254743 A2 | 01-12-2010 |
| | | ES 2488991 T3 | 01-09-2014 |
| | | KR 20100122483 A | 22-11-2010 |
| | | WO 2009103714 A2 | 27-08-2009 |
| DE 2549372 A1 | 05-05-1977 | KEINE | |
| US 2012029145 A1 | 02-02-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0708124 A
- CN 105001626
- WO 2009086459 A
- DE 44029434
- US 20030154859 A

**In der Beschreibung aufgeführte Nicht-Patentliteratur**

- Lehrbuch Klemens Kohlgrüber: Der Doppleschneck-enextruder. Hanser-Verlag, 2016, 743
- *Firma Witte Chem,* vol. 25, 6-3
- Lehrbuch Klemens Kohlgrüber: Der Doppelschneck-enextruder. Hanser-Verlag, 2016, 743